# EUROPÄISCHE PATENTSCHRIFT

(11) **EP 3 495 198 B1**
(45) Veröffentlichungstag und Bekanntmachung des Hinweises auf die Patenterteilung: **26.05.2021**
(21) Anmeldenummer: 18206109.3
(22) Anmeldetag: 14.11.2018
(51) Int. Cl.: B60N 2/30, B60N 2/68

(54) **SITZGESTELL EINES FAHRZEUGSITZES UND FAHRZEUGSITZ**
SEAT PORTION OF A VEHICLE SEAT, AND VEHICLE SEAT
REHAUSSE D'UN SIÈGE DE VÉHICULE ET SIÈGE DE VÉHICULE

(30) Priorität: 06.12.2017 DE 102017128975
(43) Veröffentlichungstag der Anmeldung: 12.06.2019
(73) Patentinhaber: Aguti Produktentwicklung & Design GmbH, 88085 Langenargen (DE)
(72) Erfinder: Rogg, Christian, 88142 Wasserburg (DE)
(74) Vertreter: Otten, Roth, Dobler & Partner mbB Patentanwälte

(56) Entgegenhaltungen:
- EP-A2- 2 272 710
- DE-A1-102005 028 033
- DE-U1- 9 308 942
- ES-U- 1 017 261
- JP-A- 2007 245 743

## Beschreibung

### Stand der Technik

Sitzgestelle eines Fahrzeugsitzes mit daran integrierten Vorrichtungen zur Anbringung eines Personenrückhaltesystems des Fahrzeugsitzes sind bekannt. Beispielsweise ist an einem solchen Sitzgestell für einen Personensitz in einem Verkehrsmittel eine Mehrpunkt- bzw. insbesondere eine Dreipunkt-Gurtanordnung bzw. eine Dreipunkt-Sicherheitsgurtanordnung integrierbar, zur Sicherung einer in dem Fahrzeugsitz sitzenden Person, welche das Gurtsystem angelegt hat.

Das Sitzgestell gibt dem Fahrzeugsitz die mechanische Stabilität und ist dafür ausgelegt an z. B. Bodenabschnitten des Fahrzeugs befestigt zu werden, wobei eine hohe mechanische Stabilität des eingebauten Sitzgestells grundlegend ist, insbesondere was z. B. kurzzeitig am Sitzgestell wirkende Höchstbelastungen bei einem Unfallszenario betrifft, um einen höchstmöglichen Personenschutz zu gewähren bzw. um gesetzliche Vorgaben zu erfüllen. Daher sind Sitzgestelle vorzugsweise als in sich stabile Stahlrahmen-Gestelle aufgebaut, an denen Anbaukomponenten wie zum Beispiel Polsterelemente anbringbar sind.

In Fahrzeugen beispielsweise Personenkraftwagen, Kleinbussen, Wohn- bzw. Campingmobilen, Caravans oder Reisemobilen dienen Sitzgestelle demgemäß als Grundstruktur für zum Beispiel einen Einer-Fahrzeugsitz oder eine Sitzbank mit Sitzmöglichkeiten für zwei oder mehrere nebeneinander sitzende Personen, beispielsweise in einer zweiten oder dritten Sitzreihe des Fahrzeugs.

Im Hinblick auf eine Nutzung des Fahrzeugsitzes ist es häufig gewünscht, mit dem Fahrzeugsitz eine Zusatzfunktion bereitzustellen, was auf einfache und platzsparende Weise und technisch zuverlässig möglich sein soll. Zum Stand der Technik werden die EP 2 272 710 A2, DE 10 2005 028 033 A1, JP 2007 245743 A, DE 93 08 942 U1 und ES 1 017 261 U genannt.

### Aufgabe und Vorteile der Erfindung

Aufgabe der vorliegenden Erfindung ist es, ein Sitzgestell für einen Fahrzeugsitz der einleitend genannten Art mit einer Zusatzfunktion wirtschaftlich und technisch vorteilhaft bereitzustellen, insbesondere was eine temporäre bzw. flexible Erweiterung im Hinblick auf die mit dem Fahrzeugsitz bereitstellbaren Sitzmöglichkeiten angeht, wobei dies platzsparend und mit vergleichsweise reduzierten Materialeinsatz bei uneingeschränkter Erfüllung der geforderten Sicherheitsanforderungen möglich sein soll.

Diese Aufgabe wird durch die unabhängigen Ansprüche gelöst.

Die abhängigen Ansprüche thematisieren vorteilhafte und zweckmäßige Weiterbildungen der Erfindung.

Die Erfindung geht aus von einem Sitzgestell eines Fahrzeugsitzes, wobei das Sitzgestell eine Grund-Sitzstruktur mit einer Stützbein-Anordnung, einer Sitzflächen-Anordnung und einer Rückenlehnen-Anordnung für den Fahrzeugsitz umfasst, und wobei am Sitzgestell Anbringstellen zur Anbringung eines Mehrpunkt-Gurtsystems für den Fahrzeugsitz vorhanden sind. Insbesondere umfasst das Sitzgestell ein aus einem Stahlmaterial gefertigtes Grundgestell mit bezogen auf den Einbauzustand senkrechten Vertikal-Stahlprofilen und dazu horizontal stehenden Horizontal-Stahlprofilen der Stützbein-, Sitzflächen- und/oder Rückenlehnen-Anordnung, welche insbesondere quer zueinander ausgerichtete Profilabschnitte umfassen. Die Vertikal- und Horizontal-Stahlprofile sind vorzugsweise miteinander verschweißt und/oder verschraubt und bilden ein im Wesentlichen starres Grundgestell. Die Stützbein-Anordnung weist z. B. über die Breite, Höhe und/oder Tiefe des Sitzgestells vorhandene senkrechte und waagerechte Profilabschnitte auf, vorzugsweise mit zwei schräg ausgerichteten Stützbeinen.

Die Sitzflächen-Anordnung umfasst beispielsweise ein horizontales Stahlprofil über die gesamte Sitzbreite des Sitzgestells, auf einer Höhe der damit zu bildenden Sitzfläche.

Die Rückenlehnen-Anordnung weist zum Beispiel ein senkrechtes Stützprofil oder vorzugsweise zwei oder drei gleiche parallel und senkrecht stehende Stütz-Profile auf, die über die Breite des Sitzgestells beabstandet zueinander vorhanden sind. In einem oberen Endbereich der Stütz-Profile kann an diesen ein Quer-Horizontalprofil angreifen. Die Stützprofile sind z. B. mit einer in Sitzrichtung rückwärtigen Seite des horizontalen Stahlprofils der Sitzflächen-Anordnung fest verbunden und gehen vorzugsweise einstückig bis zu einem unteren Ende des Sitzgestells bzw. der Grund-Sitzstruktur. Demgemäß bilden die Abschnitte der Stütz-Profile, die unterhalb des horizontalen Stahlprofils der Sitzflächen-Anordnung vorhanden ist, einen Teil der Stützbein-Anordnung.

Die metallischen horizontalen und senkrechten bzw. schrägen Profilelemente sind vorzugsweise Rundrohr- oder Vierkant-Hohlprofile, die zum Beispiel als einfache Hohlprofile oder als Zwillings-Profile aus zwei miteinander verbundenen HohlProfilen gebildet sind.

Das Sitzgestell ist derart ausgebildet, dass jeder Sitzplatz des mit der Grund-Sitzstruktur am fertigen Fahrzeugsitz bereitstellbaren Fahrzeugsitzes, egal ob damit ein Einzelsitz oder eine Mehrfachsitzbank generiert wird, mit einem jeweils dazugehörigen Mehrpunkt- bzw. Dreipunkt-Gurtsystem ausgestaltet ist. Damit ist eine uneingeschränkte Nutzung aller Sitzmöglichkeiten im Standbetrieb des Fahrzeugs und im Fahrbetrieb des Fahrzeugs möglich. Demgemäß stimmt die Sitzrichtung der Sitzmöglichkeiten, des mit dem Sitzgestell hergestellten Fahrzeugsitzes mit der Fahrtrichtung des betreffenden Fahrzeuges überein. Bei einer mit dem Sitzgestell bildbaren Mehrfach-Sitzbank sind die mehreren Sitzmöglichkeiten vorzugsweise auf einer gemeinsamen Sitzreihe im Fahrzeug nebeneinander in Fahrtrichtung bzw. fluchtend nebeneinander vorhanden.

Der Kern der Erfindung liegt darin, das Gelenkmittel zur gelenkigen Verstellung einer an der Grund-Sitzstruktur vorhandenen Erweiterungs-Struktur eines Zusatzsitzes vorhanden sind, wobei mit der Erweiterungs-Struktur an dem Fahrzeugsitz wahlweise eine zusätzliche Sitzmöglichkeit mit dem Zusatzsitz einrichtbar und wieder rückbaubar ist, wobei die Sitzrichtung des eingerichteten Zusatzsitzes mit der Sitzrichtung des Fahrzeugsitzes übereinstimmt.

Damit kann platzsparend und materialsparend ein vorhandener Fahrzeugsitz um eine weitere Sitzmöglichkeit bzw. mit dem Zusatzsitz erweitert werden. Dies ist vorteilhaft, da häufig temporär bzw. kurzfristig zum Beispiel bei Stadtfahrten wie Taxifahrten eine weitere Person transportiert werden soll. Der Zusatzsitz ist vorteilhaft bzw. vorzugsweise als gurtintegrierter Zusatzsitz ausgebildet, z. B. mit einem Dreipunkt-Sicherheitsgurtsystem versehen, wie dies auch bei den dauerhaft vorhandenen Sitzplätzen des Fahrzeugsitzes der Fall ist. Damit sind die Sitzplätze des Fahrzeugsitzes nicht nur im Standbetrieb des Fahrzeugs vorhanden, sondern sämtliche Sitzplätze des Fahrzeugsites samt Zusatzsitz sind uneingeschränkt im Fahrbetrieb zum Personentransport nutzbar.

Vorteilhafterweise kann der Umbau des am Fahrzeugsitz rückgebauten Zusatzsitzes in den eingerichteten bzw. als Sitzmöglichkeit nutzbaren Zusatzsitz mit wenigen einfachen Handgriffen in kurzer Zeit erfolgen. Ebenso ist der umgekehrte Rückbau nach der Nutzung des Zusatzsitzes wieder zurück in den am Fahrzeugsitz verstauten Zustand der Erweiterungs-Struktur einfach mit wenigen Handgriffen möglich. Das Sitzgestell und die Gelenkmittel sind so ausgebildet, dass der Umbau und der Rückbau manuell bzw. ohne Hilfsmittel wie ein Werkzeug und kurzfristig erfolgen kann. Damit kann spontan kurz vor der betreffenden Fahrt der Zusatzsitz bereitgestellt und nach der Fahrt wieder weggeklappt werden, was die flexible Nutzung des Zusatzsitzes begünstigt. Dies ist beispielsweise insbesondere für temporär auftretende Fahrten vorteilhaft, in denen eine weitere Person im Fahrzeug Platz nimmt.

Im rückgebauten Zustand der Erweiterungs-Struktur ist die Erweiterungs-Struktur am Fahrzeugsitz unauffällig bzw. zumindest nahezu nicht sichtbar bzw. optisch unauffällig am Fahrzeugsitz verstaut bzw. von dessen Teilen verdeckt, zum Beispiel von einer Sitzpolsterung verdeckt. Das Sitzgestell bzw. die Gelenkmittel sind vorzugsweise so abgestimmt, dass die Erweiterungs-Struktur im rückgebauten Zustand des Zusatzsitzes großteils in einem Bereich seitlich und/oder unterhalb der Sitzflächen-Anordnung bzw. unterhalb eines an der Sitzflächen-Anordnung anbringbaren Sitzflächen-Polsters verstaut ist.

Des Weiteren ist es vorteilhaft, dass die Erweiterungs-Struktur und die Gelenkmittel ausgebildet sind, auch nachträglich an einem bekannten Sitzgestell mit der Grund-Sitzstruktur ohne größeren Aufwand angebracht zu werden. Damit lässt sich auch eine Nachrüstung von bestehenden Sitzgestellen bzw. an der Grund-Sitzstruktur vorteilhaft erledigen.

Dabei ist es auch Vorteilhaft, dass die mit dem Fahrzeugsitz bei dessen Standard-Nutzung bereitgestellte Sitzmöglichkeit, also eines Sitzplatzes oder einer Mehrfachsitzbank durch entsprechende am Sitzgestell angebrachte Polsterelemente eine standardmäßig hohe Bequemlichkeit aufweisen. Insbesondere ist es vorteilhaft, dass der Zusatzsitz einen einzelnen zusätzlichen Sitzplatz bereitstellt. Außerdem weist auch der Zusatzsitz Anbringstellen für eine Sicherheitsanordnung wie beispielsweise ein Mehrpunkt- bzw. Dreipunktgurtsystem auf. An der Grund-Sitzstruktur sind ohnehin vorbereitete Anbringstellen für das Mehrpunkt- bzw. Dreipunktsicherheitsgurtsystem der Standard Sitzplätze des Fahrzeugsitzes vorhanden. Die Grund-Sitzstruktur ist insbesondere gemäß eines Standard-Sitzgestells bzw. eines Grundgestells für einen Fahrzeugsitz in dem Fahrzeug vorhanden. Vorzugsweise ist die Grund-Sitzstruktur derart ausgestaltet, das diese dauerhaft zumindest eine nicht wegklappbare Sitzmöglichkeit bereitstellt.

Unter der Sitzrichtung des Fahrzeugsitzes bzw. des Zusatzsitzes ist die Richtung zu verstehen, die eine Vorwärtsrichtung bedeutet für die Person, die in dem betreffenden Sitz sitzt.

Die Sitzflächen- und Rückenlehnen-Anordnung der Grund-Sitzstruktur sind außerdem vorteilhafterweise zur Anordnung bzw. Anbringung von weiteren Fahrzeugsitzelementen wie insbesondere z. B. von Polsterelementen und/oder Nackenstützen ausgebildet. Die Polsterelemente sind beispielsweise so vorhanden, dass eine Wegnahme und eine Wiederanbringen eines Polsterelements vor, während und/oder nach dem Umbau des Zusatzsitzes problemlos möglich ist. Damit ist die Polsterung des Fahrzeugsitzes nicht störend beim Umbau und kann nach dem Umbau seine Polsterungsfunktion ohne Einschränkung wieder erfüllen. Auch die Funktion der Mehrpunkt-Gurtanordnung für den Fahrzeugsitz bleibt von der Erweiterungsstruktur bzw. der Gelenkmittel unbeeinträchtigt voll erhalten. Dies bedeutet, dass die Funktion des Fahrzeugsitzes bzw. die Bereitstellung der Sitzmöglichkeiten des Fahrzeugsitzes mit der Grund-Sitzstruktur auch bei eingerichtetem Zusatzsitz komplett und dauerhaft erhalten ist.

Die Gelenkmittel umfassen vorzugsweise zumindest ein Gelenk mit genau einem Freiheitsgrad und/oder ein Gelenk mit zwei oder drei Freiheitsgraden vorzugsweise ein Drehgelenk bzw. ein Schwenkgelenk bzw. z. B. ein Drehschub-Gelenk. Als Gelenkelemente sind beispielsweise zylindrische Bauteile zur Bildung einer Gelenkachse mit daran geführt hin- und zurückdrehbarem Gelenkteil vorgesehen. Vorzugsweise umfassen die Gelenkmittel eine erste Gelenkachse, die um eine weitere bzw. die um eine zur ersten Gelenkachse senkrecht ausgerichtete zweite Gelenkachse drehbar ist. Ein jeweiliger bei einer Dreh- bzw. Schwenkbewegung eines Elements des Zusatzsitzes zwischen z. B. Anschlägen überstreichbare Winkelbereich beim Umbau zum Zusatzsitz beträgt vorzugsweise circa 90 Winkelgrade, die einmal, zweimal oder dreimal des jeweiligen Elements beim Umbau bzw. beim Rückbau überstrichen werden oder z. B. einmalig 180 Winkelgrade.

Weiter ist es vorteilhaft, dass die Gelenkmittel derart ausgebildet sind, dass die mit dem eingerichteten Zusatzsitz bereitgestellte Sitzmöglichkeit sich seitlich neben einer von dem Fahrzeugsitz im nicht erweiterten Zustand bereitgestellten Sitzmöglichkeit befindet.

Damit wird z. B. für einen Fahrbetrieb eine von dem Fahrzeugsitz gebildete quer zur Fahrtrichtung verlaufende Sitzreihe im Fahrzeug um eine Sitzmöglichkeit erweitert. Der Bereich vor und hinter der Sitzreihe bleibt vom Zusatzsitz unberührt. Man benötigt lediglich einen Freiraum seitlich neben einer Seite der durch den Fahrzeugsitz im Standard-Betrieb gebildeten Sitzreihe bzw. neben dem betreffenden Einzel-Fahrzeugsitz.

Beispielsweise ist damit vorteilhaft ein vergleichsweise schmaler Freibereich im Fahrzeug zur Sitzplatzbereitstellung temporär nutzbar. Der Freibereich kann damit vorteilhaft im Nicht-Fahrbetreib freigehalten werden, der Zusatzsitz ist dann rückgebaut bzw. eingeklappt aus dem Freibereich wegbewegt, kann aber im Fahrbetrieb ohne Nachteil genutzt werden für einen zusätzlichen Sitzplatz.

Dies ist insbesondere bei einem Sitzplatz oder einer Sitzbank im Fahrzeug vorteilhaft, welch mit einer Seite an eine Fahrzeugwand anschließt zum Beispiel einen Fenstersitzplatz generiert und mit der anderen Seite an einen Fahrzeuggang bzw. einen Seitengang oder Zwischengang des Fahrzeugs angrenzt.

Der Fahrzeuggang wird bei stehenden Fahrzeugen notwendigerweise in der Regel freigehalten, um Platz bereitzustellen, zum Beispiel zum Einsteigen und zum Aussteigen und für einen Durchgang von vorne nach hinten und umgekehrt.

Im Fahrbetrieb kann dieser Freibereich aber meist ohne weiteres belegt werden, so dass dort für eine effektivere bzw. bessere Raumnutzung im Fahrzeug temporär eine Zusatznutzung mit dem Zusatz-Sitzplatz generiert werden kann. Die vorliegende Erfindung ist daher insbesondere für solche und ähnliche Fälle vorteilhaft.

Es ist überdies vorteilhaft, dass die Erweiterungs-Struktur ein an der Grund-Sitzstruktur verstellbar aufgenommenes Rückenlehnen-Element umfasst. Das Rückenlehnen-Element stellt eine grundlegende Funktionseinheit des Zusatzsitzes bereit, was die rückwärtige Abstützung des Oberkörpers einer in dem Zusatzsitz sitzenden Person angeht.

Mit der gelenkigen Verstellung mittels der Gelenkmittel kann das Rückenlehnen-Element in den rückgebauten bzw. am Sitzgestell angeklappten Zustand gebracht werden, also z. B. entweder horizontal ausgerichtet bzw. parallel zur Sitzfläche des mit der Grund-Sitzstruktur bereitstellbaren Fahrzeugsitzes oder parallel zu einer aufrechten Seite der Rückenlehnen-Anordnung der Grund-Sitzstruktur und in den dazu verstellten Nutzzustand mit aufrechtem Rückenlehnen-Element seitlich neben einer Rückenlehne am Fahrzeugsitz. An dem Rückenlehnen-Element des Zusatzsitzes lassen sich zudem Anbringstellen des Zusatzsitzes ausbilden, z. B. für das Mehrpunkt-Gurtsystem, eine Kopfstütze und gegebenenfalls eine Zusatzsitz-Polsterung.

Erfindungsgemäß umfasst die Erweiterungs-Struktur ein an der Grund-Sitzstruktur verstellbar aufgenommenes Sitzflächen-Element. Das Sitzflächen-Element ist eine grundlegende Funktionseinheit des Zusatzsitzes auf der die betreffende Person sitzt. Eine mögliche Minimallösung des Fahrzeugsitzes umfasst allein das Rückenlehnen-Element und das Sitzflächen-Element.

Eine weitere vorteilhafte Abwandlung der Erfindung zeichnet sich dadurch aus, dass der mit der Grund-Sitzstruktur bereitstellbare Fahrzeugsitz als Einer-Sitzplatz oder als Mehrfach-Sitzbank ausgebildet ist. Mit dem Zusatzsitz kann damit ein Einer-Sitzplatz in eine Zweier-Sitzbank umgebaut werden oder eine Zweier-Sitzbank in eine Dreier-Sitzbank und so weiter. In einem Fahrzeug sind ein Einer-Sitzplatz, eine Zweier-Sitzbank oder eine Dreier-Sitzbank die regelmäßig vorhandenen Sitzmöglichkeiten. Damit ist der Erfindungsgegenstand in nahezu jedem Fahrzeug bzw. in Fahrzeugen mit einem seitlichen Freiraum neben einem Fahrzeugsitz vorteilhaft nutzbar.

Weiter wird vorgeschlagen, dass gemäß einer vorteilhaften Ausbildung der Erfindung die Gelenkmittel ein erstes Schwenkgelenk umfassen, mit welchem das Rückenlehnen-Element der Erweiterungs-Struktur aus einer an der Sitzflächen-Anordnung herangeklappten Stellung in eine aufrechte Stellung schwenkbar und wieder zurückschwenkbar ist. Damit kann eine besonders kompakte Anordnung im herangeklappten Zustand des Rückenlehnen-Elements erreicht werden. Das erste Schwenkgelenk ist beispielsweise seitlich an einer Außenseite der Sitzflächen-Anordnung vorhanden und weist eine horizontale Gelenk- bzw. Schwenkachse auf. Vorzugsweise wird mit dem ersten Schwenkgelenk das Rückenlehen-Element um 90 Winkelgrade hin- bzw. hoch- und zurückgeschwenkt. Bei angeklapptem Rückenlehnen-Element im Nutzzustand des Fahrzeugsitzes bzw. bei nicht eingerichtetem Zusatzsitz ist das Rückenlehnen-Element auf seiner nach oben gerichteten Rückseite vorzugsweise ausgebildet zur Auflage eines abnehmbaren Sitzflächenpolsters des Fahrzeugsitzes. Zum Erstellen des Zusatzsitzes wird bei dieser Variante das Sitzflächenpolster und auch ein Rückenlehnenpolster des Fahrzeugsitzes abgenommen und dann das horizontal ausgerichtete Rückenlehnen-Element mit Hilfe des ersten Schwenkgelenks in die aufrechte Position verschwenkt. Nach dem Umbau mit weiteren Umbauschritten bis zum fertigen Zusatzsitz werden das Sitzflächenpolster und das Rückenlehnenpolster wieder an der Grund-Sitzstruktur angebracht bzw. aufgelegt, so dass der Fahrzeugsitz im Sitz- und Rückenbereich wie vor dem Umbau wieder gepolstert ist.

Das Rückenlehnen-Element und das Sitzflächen-Element des Zusatzsitzes weisen demgegenüber zum Beispiel eine daran jeweils fest vorhandene bzw. dauerhafte und vergleichsweise dünnere Polsterung auf.

Vorteilhaft ist es, wenn das erste Schwenkgelenk eine auf den Nutzzustand bezogen horizontal ausgerichtete Gelenkachse bereitstellt. Dies schließt auch ein, wenn die Gelenkachse zumindest im Wesentlichen horizontal ausgerichtet ist. Die Gelenkachse kann beispielsweise durch einen einfachen zylindrischen Gelenkkörper wie ein Zylinderprofil gebildet werden. Vorzugsweise befindet sich die Gelenkachse in einem unteren Bereich an dem Rückenlehnen-Element. Das erste Schwenkgelenk befindet sich vorzugsweise in vertikaler Richtung auf der Höhe bzw. im Bereich seitlich neben der Sitzflächen-Anordnung oder Grund-Sitzstruktur.

Eine vorteilhafte Modifikation der Erfindung zeichnet sich dadurch aus, dass die Gelenkmittel ein zweites Schwenkgelenk umfassen, mit welchem das Rückenlehnen-Element der Erweiterungs-Struktur um eine vertikale Achse schwenkbar ist. Vorzugsweise ist dies im aufrechten Zustand des Rückenlehnen-Elements möglich. Damit ist das Rückenlehnen-Element platzsparend aus einer herangeklappten Position in eine aufrechte Position seitlich neben der Rückenlehnen-Anordnung der Grund-Sitzstruktur bringbar. Dies erfolgt vorzugsweise in der vertikal aufrechten Stellung des Rückenlehnen-Elements.

Erfindungsgemäß sind die Gelenkmittel derart ausgebildet, dass das Sitzflächen-Element der Erweiterungs-Struktur aus einer vertikal ausgerichteten Abklappstellung in eine horizontal ausgerichtete Nutzstellung schwenkbar ist und wieder in die Abklappstellung zurückschwenkbar ist. Damit ist es möglich, das Sitzflächen-Element aus einer kompakt versenkten Position an der Grund-Sitzstruktur in seine horizontale Nutzstellung zu bringen. Das Hochschwenken des Sitzflächen-Elements um die Horizontale erfolgt vorzugsweise wenn die Achse quer zur Sitzrichtung steht zum Beispiel nachdem das Sitzflächen-Element aus einer an der Grund-Sitzstruktur herangeklappten Position um die Vertikale weggeschwenkt wurde, insbesondere als letzter Umbauschritt des Sitzflächen-Elements in die endgültige Nutzstellung.

Weiter wird vorgeschlagen, dass gemäß einer vorteilhaften Ausbildung der Erfindung die Gelenkmittel ein Rückenlehnen-Schwenkgelenk umfassen, mit welchen das Rückenlehnen-Element der Erweiterungs-Struktur aus einer an der Rückenlehnen-Anordnung der Grund-Sitzstruktur herangeklappten Stellung in eine von der Rückenlehnen-Anordnung weggeklappten Stellung schwenkbar ist uns wieder in die herangeklappte Stellung zurückschwenkbar ist. Vorzugsweise ist bei dieser Variante das Rückenlehnen-Element allein über das Rückenlehnen-Schwenkgelenk verstellbar, das eine im Nutzzustand senkrechte Achse aufweist. Dabei verschwenkt das Rückenlehnen-Schwenkgelenk um 180 Winkelgrade. Das Rückenlehnen-Element kennt demgemäß nur die aufrechte bzw. vertikale Ausrichtung, sowohl in der herangeklappten als auch in der weggeklappten Stellung. Ein Schwenken des Rückenlehnen-Elements um eine horizontale Achse erfolgt nicht. Damit können die Gelenkmittel einfacher gestaltet werden. Das Rückenlehnen-Element ist vorzugsweise allein an der Rückenlehnen-Anordnung der Grund-Sitzstruktur gelenkig aufgenommen.

Außerdem ist dabei das Rückenlehnen-Element vorzugsweise unabhängig bzw. getrennt vom Sitzflächen-Element bzw. sind die beiden Elemente jeweils für sich unabhängig vom anderen Element schwenkbar.

Das Rückenlehnen-Element und die Rückenlehnen-Anordnung sind vorzugsweise so abgestimmt, dass das Rückenlehnen-Element im angeklappten Zustand an der Rückenlehnen-Anordnung bündig in der Rückenlehnen-Anordnung bzw. gegebenenfalls in deren Polsterung aufgenommen ist. Damit ist ein bequemes Sitzen bzw. Anlehnen im Fahrzeugsitz möglich, wenn der Zusatzsitz nicht eingerichtet ist Weiter ergibt sich ein Vorteil dann, wenn das Rückenlehnen-Schenkgelenk eine vertikal ausgerichtete Schwenkachse aufweist. Vorzugsweise verläuft die Schwenkachse im Bereich seitlich entlang der Höhe der Rückenlehnen-Anordnung der Grund-Sitzstruktur.

Es ist überdies vorteilhaft, dass die Gelenkmittel ein Sitzflächen-Schwenkgelenk derart umfassen, dass das Sitzflächen-Element getrennt vom Rückenlehen-Element unabhängig von der Stellung des Rückenlehnen-Elements schwenkbar ist. Damit kann platzsparend und auf einfache Weise der Umbau des Zusatzsitzes in die Nutzstellung und zurück in die Nicht-Nutzstellung realisiert werden.

Erfindungsgemäß ist das Sitzflächen-Element aus einer an der Sitzflächen-Anordnung herangeklappten Stellung in eine von der Sitzflächen-Anordnung weggeklappten Stellung um eine vertikale Achse verschwenkbar und wieder zurück. Insbesondere ist das Sitzflächen-Schwenkgelenk derart ausgebildet, dass das Sitzflächen-Element nur in der von der

Grund-Sitzstruktur weggeklappten Stellung aus einer vertikal ausgerichteten Abklappstellung in eine horizontal ausgerichtete Nutzstellung schwenkbar ist und wieder zurück.

Schließlich ist es auch von Vorteil, dass der eingerichtete Zusatzsitz über die Stützbein-Struktur der Grund-Sitzstruktur abgestützt ist. Der Zusatzsitz verfügt vorteilhaft über kein nur ihm zugehöriges bzw. gesondertes Stützbein. Damit lässt sich Bauraum und Material bzw. Gewicht einsparen. Insbesondere kann die Erweiterung-Struktur einfacher gestaltet und verstellt werden bzw. gänzlich ohne Stützbein-Element auskommen.

Vorteilhafterweise sind bei allen dargelegten Varianten der Erfindung Haltemittel zur lösbaren Arretierung insbesondere einer End- bzw. Anschlag- oder Zwischen-Schwenkstellung des Sitzflächen-Elements und/oder des Rückenlehnen-Elements vorgesehen. Damit wird der Umbau erleichtert und ein eingerichteter oder rückgebauter Zustand des Zusatzsitzes gesichert gegen ein unerwünschtes selbsttätiges Verstellen.

Die Erfindung erstreckt sich auch auf einen Fahrzeugsitz mit einem Sitzgestell gemäß einer der oben dargelegten Ausbildungen. Der Fahrzeugsitz ist als Einer-Fahrzeugsitz oder als Fahrzeug-Sitzbank mit mehreren Sitzplätzen ausgebildet zum Beispiel als Zweier-Sitzbank oder Dreier-Sitzbank. Der Fahrzeugsitz umfasst vorzugsweise Nackenstützen und eine Polsterung für die Sitzflächen und Rückenlehnen des Fahrzeugsitzes und gegebenenfalls weitere Komponenten eines Fahrzeugsitzes wie zum Beispiel Einstellmittel zur Sitzflächen-Höhenverstellung und/oder Armlehnen-Elemente. Die Anzahl der Regel-Sitzplätze des Fahrzeugsitzes ist vorteilhaft mit dem Zusatzsitz um einen Sitzplatz vorzugsweise für eine temporäre Sitzplatzsituation schnell und unkompliziert erweiterbar.

### Figurenbeschreibung

Weitere Merkmale und Vorteile der Erfindung sind anhand der schematisch in den Figuren dargestellten Ausführungsbeispiele der Erfindung näher erläutert. Im Einzelnen zeigt:
- Fig. 1: eine Vorderansicht auf einen ersten Fahrzeugsitz mit einem erfindungsgemäßen Sitzgestell in einem Einbauzustand in einem Fahrzeug,
- Fig. 2: eine erste Seitenansicht der Anordnung gemäß Fig. 1,
- Fig. 3: eine zweite Seitenansicht der Anordnung gemäß Fig. 1,
- Fig. 4: eine Ansicht von oben auf die Anordnung gemäß Fig. 1,
- Fig. 5: die Anordnung gemäß Fig. 1 mit abgenommenen Polsterelementen,
- Fig. 6: die Anordnung gemäß Fig. 5 von oben,
- Fig. 7: die Anordnung gemäß Fig. 5 in einem Umbauzustand mit angedeutetem Umbauschritt,
- Fig. 8: die Anordnung in Vorderansicht nach dem in Fig. 7 angedeuteten Umbauschritt,
- Fig. 9: die Anordnung gemäß Fig. 8 von oben,
- Fig. 10: die Anordnung in Vorderansicht nach einem weiteren Umbauschritt, der dem Umbauzustand gemäß Fig. 8 folgt,
- Fig. 11: die Anordnung gemäß Fig. 10 von oben,
- Fig. 12: der vollständig umgebaute Fahrzeugsitz in Vorderansicht nach einem weiteren Umbauschritt, der dem Umbauzustand gemäß Fig. 10 und 11 folgt, mit eingerichtetem Zusatzsitz,
- Fig. 13: eine erste Seitenansicht der Anordnung gemäß Fig. 12,
- Fig. 14: eine zweite Seitenansicht der Anordnung gemäß Fig. 12,
- Fig. 15: eine Ansicht von oben auf die Anordnung gemäß Fig. 12,
- Fig. 16: eine Vorderansicht auf eine zweite Variante eines Fahrzeugsitzes mit einem erfindungsgemäßen Sitzgestell in einem Einbauzustand in einem Fahrzeug,
- Fig. 17: eine erste Seitenansicht der Anordnung gemäß Fig. 16,
- Fig. 18: eine zweite Seitenansicht der Anordnung gemäß Fig. 16,
- Fig. 19: eine Ansicht von oben auf die Anordnung gemäß Fig. 16,
- Fig. 20: die Anordnung gemäß Fig. 16 nach einem ersten Umbauschritt,
- Fig. 21: die Anordnung gemäß Figur 20 von oben,
- Fig. 22: die Anordnung in Vorderansicht nach einem weiteren Umbauschritt, der dem Umbauzustand gemäß Fig. 20, 21 folgt,
- Fig. 23: die Anordnung gemäß Figur 22 von oben,
- Fig. 24: der vollständig umgebaute Fahrzeugsitz nach einem weiteren angedeutete Umbauschritt, der dem Umbauzustand gemäß der Fig. 22, 23 folgt, mit eingerichtetem Zusatzsitz,
- Fig. 25: eine erste Seitenansicht der Anordnung gemäß Fig. 24,
- Fig. 26: eine zweite Seitenansicht der Anordnung gemäß Fig. 24 und
- Fig. 27: eine Ansicht von oben auf die Anordnung gemäß Fig. 24.

Nachfolgend sind für sich entsprechende Elemente unterschiedlicher Ausführungsbeispiele teilweise die gleichen Bezugszeichen verwendet.

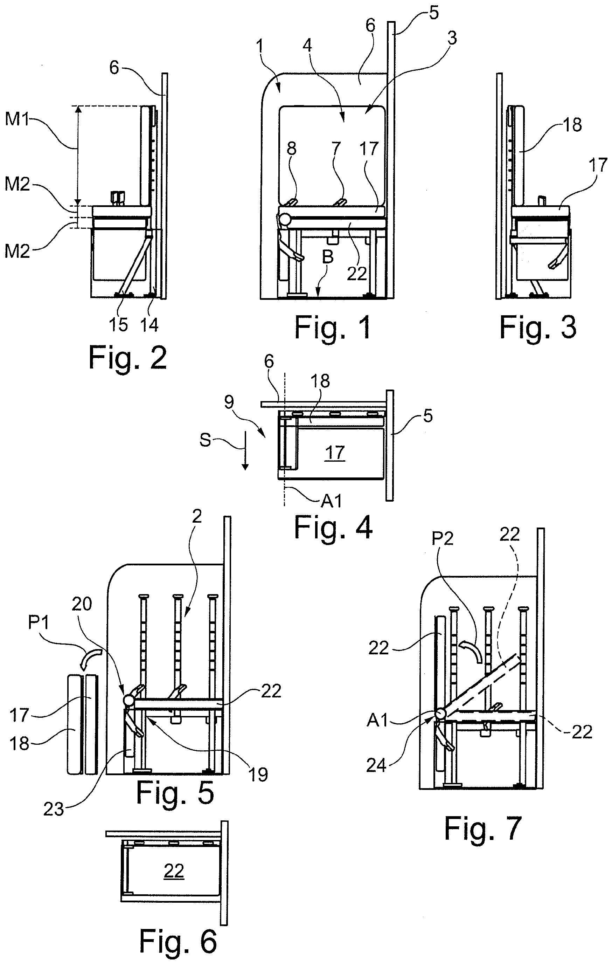

In den Fig. 1 bis 4 ist ein erfindungsgemäßer Fahrzeugsitz 1 mit einem erfindungsgemäßen Sitzgestell 2 in einem Regel-Nutzzustand dargestellt. Der Fahrzeugsitz 1 ist als Zweier-Sitzbank mit einem ersten Sitzplatz 3 und einem zweiten Sitzplatz 4 ausgebildet, die parallel nebeneinander vorhanden sind. Die beiden Sitzplätze 3 und 4 stellen für zwei Personen je eine Sitzmöglichkeit bereit, wobei die beiden Personen im Fahrzeugsitz 1 in Sitzrichtung S sitzen. Die Sitzrichtung S des Fahrzeugsitzes 1 stimmt mit der Fahrtrichtung des Fahrzeugs überein.

Der Fahrzeugsitz 1 ist in einem Fahrzeug eingebaut, von dem ausschnittsweise eine Karosseriewand bzw. eine Seitenwand 5 und eine quer dazu ausgerichtete Innenwand 6 dargestellt sind. Der Sitzplatz 3 ist z. B. benachbart an einem Fenster in der Seitenwand 5, wohingegen der Sitzplatz 4 mit seiner der Seitenwand 5 abgewandten Seite an einen Freibereich bzw. einen Fahrzeuggang 9 im Fahrzeuginneren angrenzt.

Der Zweier-Sitzbank-Fahrzeugsitz 1 ist für die Nutzung als Sitzmöglichkeiten während der Fahrt des Fahrzeugs mit einem Mehrpunkt-Personen-Rückhaltesystem ausgestattet bzw. mit einem Dreipunkt-Sicherheitsgurtsystem, von dem nur einzelne Komponenten wie ein Gurtschloss 7 für den Sitzplatz 3 und ein Gurtschloss 8 für den Sitzplatz 4 dargestellt sind.

Das Sitzgestell 2 besteht vorzugsweise aus einer Rahmenstruktur aus einem Stahlmaterial, bevorzugt mit verbundenen geraden Hohlprofilen. Beispielhaft umfasst das Sitzgestell 2 eine Grund-Sitzstruktur 10 mit einer Stützbein-Anordnung 11, einer Sitzflächen-Anordnung 12 und einer Rückenlehnen-Anordnung 13.

Die Stützbein-Anordnung 11 umfasst senkrechte Stützbeine 14 und dazu schräg ausgerichtete Stützbeine 15. Die Sitzflächen-Anordnung 12 umfasst zumindest eine horizontale Querstrebe 16 über die Breite der Grund-Sitzstruktur 10. Die Rückenlehnen-Anordnung 13 weist drei vertikal ausgerichtete parallele Stützen 12a, 12b und 12c auf, an denen vorderseitig die Querstrebe 16 befestigt zum Beispiel angeschweißt ist.

Die Stützen 12a, 12b und 12c können unterhalb der Querstrebe 16 sich bis zu einem Boden B des Fahrzeugs verlängern, um senkrechte Stützbeine der Stützbein-Anordnung 11 zu bilden, oder an der Querstrebe 16 enden.

Des Weiteren sind für eine Polsterung des Fahrzeugsitzes 1 bzw. der Sitzflächen-Anordnung 12 und der Rückenlehnen-Anordnung 13 ein Sitzpolster-Element 17 und ein Rückenlehnenpolster-Element 18 vorhanden, die lose aber fixiert an der Grund-Sitzstruktur 10 in horizontaler und vertikaler Ausrichtung anordenbar sind. Das Sitzpolster-Element 17 und das Rückenlehnenpolster-Element 18 können mit wenigen Handgriffen von der Grund-Sitzstruktur 10 gemäß Pfeil P1 abgenommen (s. Fig. 5) und wieder angebracht werden.

An der Grund-Sitzstruktur 10 ist eine Erweiterungs-Struktur 19 vorhanden, welche mit Gelenkmitteln 20 des Sitzgestells 2 verstellbar ist, um temporär einen zusätzlichen Sitzplatz bzw. einen gurtintegrierten Zusatzsitz 21 am Fahrzeugsitz 1 einzurichten und wieder rückzubauen.

Die Erweiterungs-Struktur 19 umfasst ein an der Grund-Sitzstruktur 10 verstellbar aufgenommenes Rückenlehnen-Element 22 und ein Sitzflächen-Element 23, das in vertikaler Richtung unterhalb benachbart zum Rückenlehnen-Element 22 vorhanden ist. Die beiden Elemente 22 und 23 weisen vorzugsweise eine gleiche Breite auf und sind als stabile Konstruktion, zum Beispiel aus Stahlprofilen aufgebaut, vorzugsweise mit einer Leichtbau-Stützstruktur und einer Leichtbau- bzw. Kompaktpolsterung auf der jeweiligen Nutzseite für eine im Zusatzsitz sitzende Person. An der Erweiterungs-Struktur 19 und damit am Zusatzsitz 21 im eingerichteten Zustand am Fahrzeugsitz 1 sind vorbereitete Anbringstellen für ein selbsttätiges Rückhaltesystem vorhanden. Damit ist der Zusatzsitz gurtintegriert, vorzugsweise mit einem Dreipunkt-Rückhaltesystem bzw. einem Dreipunkt-Sicherheitsgurt ausgestattet. Dementsprechend ist das Sitzgestell 2 mechanisch stabil bzw. hochbelastbar konzipiert bzw. ausgelegt, was z. B. durch eine entsprechende auf Belastungsversuchen basierende Stahlrahmen-Konstruktion realisiert ist.

Die Gelenkmittel 20 umfassen ein erstes Schwenkgelenk 24, mit welchem das horizontal ausgerichtete Rückenlehnen-Element 22 aus einer an der Sitzflächen-Anordnung 12 herangeklappten Stellung gemäß der Fig. 5, 6 um eine vertikale Achse A1 des Schwenkgelenks 24 in Richtung P2 um 90 Winkelgrade in eine aufrechte Stellung schwenkbar ist, was in Fig. 7 durch die gestrichelte Umrandung des Rückenlehnen-Elements 22 in dessen Horizontal- und einer Zwischen-Schwenkstellung angedeutet ist.

In der senkrecht stehenden bzw. hochgeklappten Stellung des Rückenlehnen-Elements 22 wird über ein zweites Schwenkgelenk 25, das eine vertikale bzw. senkrechte Achse A2 bereitstellt, das Rückenlehnen-Element 22 gemäß dem Pfeil P3 um 90 Winkelgrade um die Achse A2 verschwenkt, bis das Rückenlehnen-Element 22 seitlich neben und in Verlängerung des Sitzplatzes 4 vorhanden ist.

Das Sitzflächen-Element 23 ist z. B. im Bereich der Achse A1 mit dem Rückenlehnen-Element 22 verbunden und schwenkt gemeinsam mit dem Rückenlehnen-Element 22 gemäß P3 um die Achse A2. Dabei wird das Sitzflächen-Element 23 aus seiner an der Grund-Sitzstruktur 10 herangeklappten Stellung weggeschwenkt. Die Erweiterungs-Struktur 19 bzw. damit das Rückenlehnen-Element 22 und das Sitzflächen-Element 23 befinden sich in aufrechter senkrechter Stellung. Dabei ragt die seitlich an der Grund-Sitzstruktur 10 wegstehende Erweiterungs-Struktur 19 in den Fahrzeuggang 9 hinein.

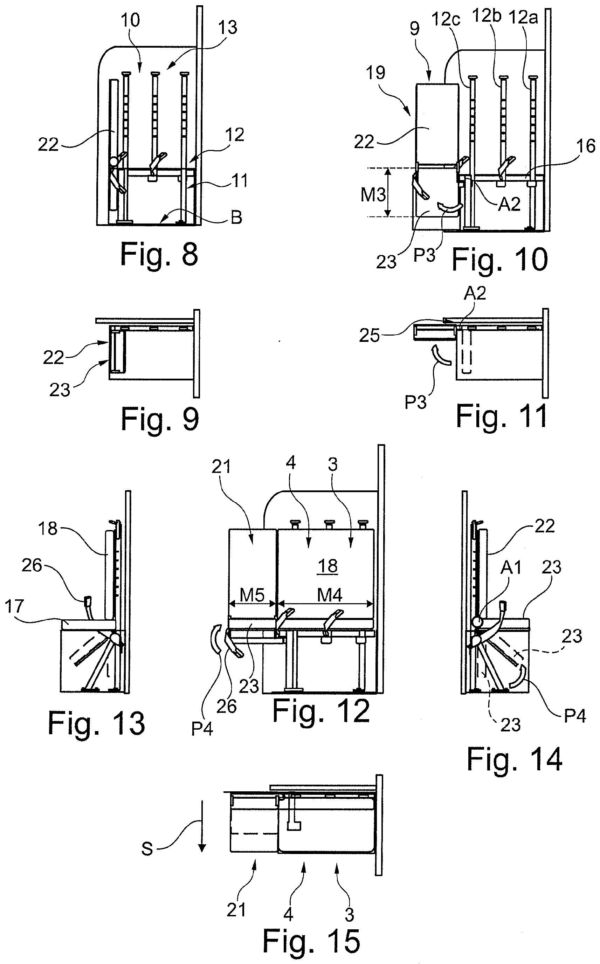

Um den Zusatzsitz 21 in den fertigen Umbau- bzw. Nutzzustand zu bringen, wird schließlich das Sitzflächen-Element 23 aus der vertikal ausgerichteten Abklappstellung gemäß Fig. 10, 11 um 90 Winkelgrade in die horizontal ausgerichtete Nutzstellung gebracht, was gemäß Pfeil P4 um die zuvor mitverschwenkte Achse A1 des Schwenkgelenks 24 erfolgt. Der Schwenkvorgang P4 ist in den Fig. 13 und 14 durch den gestrichelten Umriss des Sitzflächen-Element 23 in der Abklappstellung und einer Zwischenstellung angedeutet. Dabei befindet sich die horizontale Achse A1 um 90 Winkelgrade verschwenkt verglichen zur Achs-Ausrichtung gemäß den Stellungen nach den Fig. 1 bis 9.

Anschließend werden das Sitzpolster-Element 17 und das Rückenlehnenpolster-Element 18 wieder an der Grund-Sitzstruktur 10 angebracht.

Die Sitzrichtung S des Zusatzsitzes 21 und der Sitzplätze 3 und 4 ist identisch in Fahrtrichtung. Am Zusatzsitz 21 ist außerdem ein Dreipunkt-Gurtsystem integriert, von dem in den Figuren das Gurtschloss 26 dargestellt ist, welches am Sitzflächen-Element 23 angebracht ist.

Der Zusatzsitz 21 befindet sich seitlich neben dem Sitzplatz 4 des Fahrzeugsitzes 1. Die Zweier-Sitzbank gemäß der Fig.1 bis 4 ist in eine Dreier-Sitzbank gemäß der Fig. 12 bis 15 durch mehrere einfache, nacheinander stattfindende Schwenk- bzw. Klappvorgänge umgebaut.

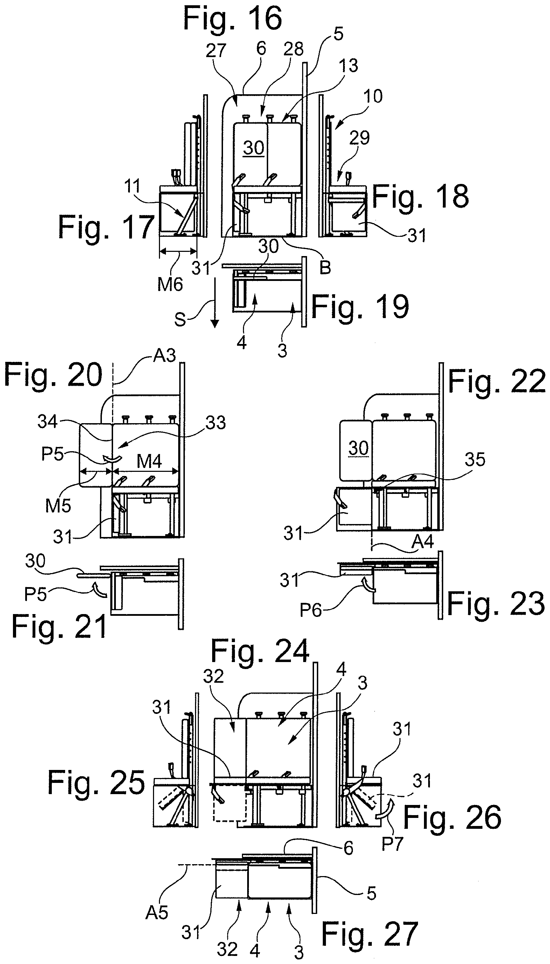

Einen alternativen erfindungsgemäßen Fahrzeugsitz 27 mit einem erfindungsgemäßen Sitzgestell 28 zeigen die Figuren 16 bis 27. Der Fahrzeugsitz 27 ist entsprechend dem Fahrzeugsitz 1 seitlich angrenzend und quer zu einer Seitenwand 5 und in Fahrt- bzw. Sitzrichtung S vor einer Innenwand 6 in einem Fahrzeuginneren eingebaut. Das an einem Boden B bzw. einer Bodenstruktur des Fahrzeugs über eine Stützbein-Anordnung 11 fixierte Sitzgestell 28 weist eine Grund-Sitzstruktur auf, welche mit der Grund-Sitzstruktur 10 des Fahrzeugsitzes 1 übereinstimmt. An dem Fahrzeugsitz 27 ist gegenüber dem Fahrzeugsitz 1 lediglich eine andere Erweiterungsstruktur 29 und eine andere Polsterung vorhanden.

Die Erweiterungsstruktur 29 des Fahrzeugsitzes 27 umfasst ein Rückenlehnen-Element 30 und ein dazu separates Sitzflächen-Element 31, die verstellbar an der Grund-Sitzstruktur 10 gelagert sind. Die am Fahrzeugsitz 27 integrierte Polsterung wird zum Umbauen des Fahrzeugsitzes 27 und zum Einrichten eines Zusatzsitzes 32 des Fahrzeugsitzes 27 nicht verändert, was den Umbau und Rückbau noch schneller und einfacher in wenigen Handgriffen möglich macht. Bei rückgebautem Zusatzsitz 32 stellt der als Zweier-Sitzbank ausgebildete Fahrzeugsitz 27 die Sitzplätze 3 und 4 in Sitzrichtung S bereit.

Zum Einrichten des Zusatzsitzes 32 mit Gelenkmitteln 33 des Sitzgestells 28 wird zunächst das aufrechte bzw. vertikal stehende Rückenlehnen-Element 30 aus seiner an der Rückenlehnen-Anordnung 13 herangeklappten Stellung gemäß der Fig. 16 bis 19 mit einem Schwenkgelenk 34 der Gelenkmittel 33 um eine dazugehörige vertikale Achse A3 um 180 Winkelgrade nach außen geschwenkt bzw. geklappt, was durch den Pfeil P5 angedeutet ist, bis in eine zur Rückenlehnen-Anordnung 13 fluchtend ausgerichteten Stellung (s. Fig. 20, 21) des Rückenlehnen-Elements 30. Mit dem ausgeklappten Rückenlehnen-Element 30 wird die Zweier-Rückenlehne der Sitzplätze 3 und 4 um eine weitere Rückenlehne erweitert.

In der an der Rückenlehnen-Anordnung 13 herangeklappten Stellung bildet das Rückenlehnen-Element 30 ein Anlageelement der Rückenlehne des Sitzplatzes 4. Dabei ist eine nach vorne gerichtete erste flächige gepolsterte Seite des Rückenlehnen-Elements 30 bündig mit einer Vorderseite der Polsterung des seitlich benachbarten Sitzplatzes 3 (s. Fig. 19). Dementsprechend weist die Rückenlehnen-Anordnung 13 zueinander in der Tiefe versetzte nebeneinander liegende Anlehnflächen auf, also versetzte Ebenen der Vorderseite der Rückenlehne des Sitzplatzes 4 und des Sitzplatzes 3. Bei eingerichtetem Zusatzsitz 32 gemäß der Fig. 24 bis 27 bilden die Rückenlehne des Zusatzsitzes 32 und des benachbarten Sitzplatzes 4 eine Ebene, die entsprechend der Dicke des Rückenlehnen-Elements 30 etwas nach hinten versetzt ist zur Ebene der Rückenlehne des weiteren Sitzplatzes 3 (s. Fig. 27).

Gemäß der in den Fig. 20 und 21 gezeigten seitlich ausgeklappten Stellung des Rückenlehnen-Elements 30 befindet sich das Sitzflächen-Element 31 angeklappt vertikal ausgerichtet an der Grund-Sitzstruktur 10 bzw. an der Stützbein-Anordnung 11 und der Sitzflächen-Anordnung 12.

Anschließend wird über ein weiteres Schwenkgelenk 35 der Gelenkmittel 33 das Sitzflächen-Element 31 um eine vertikale bzw. senkrechte Achse A4 gemäß P6 um 90 Winkelgrade nach außen geklappt. Das ausgeklappte Sitzflächen-Element 31 ist fluchtend zum Rückenlehnen-Elements 30 unterhalb des Rückenlehnen-Elements 30 vorhanden. Abschließend wird über eine weitere Gelenkfunktion der Gelenkmittel 33 das vertikal ausgerichtete Sitzflächen-Element 31 gemäß der Schwenkbewegung bzw. P7 um 90 Winkelgrade zur horizontalen Achse A5 um 90 Winkelgrade nach oben geklappt in die horizontale Nutzstellung des Sitzflächen-Elements 31 (s. Fig. 24-27).

Bei dem Fahrzeugsitz 27 ist es aufgrund der baulichen Entkopplung bzw. Trennung von Rückenlehnen-Element 30 und Sitzflächen-Element 31 nicht ausgeschlossen, dass ausgehend vom rückgebauten Zusatzsitz 32 zuerst das Sitzflächen-Element 31 in die Nutzstellung und danach das Rückenlehnen-Element 30 in die Nutzstellung gebracht wird.

In den Fig. 1 bis 27 nicht dargestellt sind manuell lösbare und in der Rückbau- und/oder Nutzstellung der Zusatzsitze 21 und 32 vorzugsweise selbsteinrichtende Haltemittel zur Endlage-Positionierung und Arretierung der jeweiligen Schwenkstellung der Rückenlehnen-Elemente 22 bzw. 30 und der Sitzflächen-Elemente 23 bzw. 31.

Der Rückbau des Zusatzsitzes 21 und des Zusatzsitzes 32 erfolgt ggf. nach der Entsicherung der Haltemittel entsprechend dem Vorgang beim Einrichten des jeweiligen Zusatzsitzes 21, 32 vorzugsweise in umgekehrter Reihenfolge der Einzelschritte gemäß P1 bis P7.

Typische bzw. bevorzugte Maße M1 bis M6 betragen zum Beispiel: M1: 75 cm (Zentimeter), M2: 8 cm, M3: 45 cm, M4: 80 cm, M5: 40 cm und M6: 45 cm.

### Bezugszeichenliste:

- 1: Fahrzeugsitz
- 2: Sitzgestell
- 3, 4: Sitzplatz
- 5: Seitenwand
- 6: Innenwand
- 7: Gurtschloss
- 8: Gurtschloss
- 9: Fahrzeuggang
- 10: Grund-Sitzstruktur
- 11: Stützbein-Anordnung
- 12: Sitzflächen-Anordnung
- 12a: Stütze
- 12b: Stütze
- 12c: Stütze
- 13: Rückenlehnen-Anordnung
- 14, 15: Stützbein
- 16: Querstrebe
- 17: Sitzpolster-Element
- 18: Rückenlehnenpolster-Element
- 19: Erweiterungs-Struktur
- 20: Gelenkmittel
- 21: Zusatzsitz
- 22: Rückenlehnen-Element
- 23: Sitzflächen-Element
- 24: Schwenkgelenk
- 25: Schwenkgelenk
- 26: Gurtschloss
- 27: Fahrzeugsitz
- 28: Sitzgestell
- 29: Erweiterungs-Struktur
- 30: Rückenlehnen-Element
- 31: Sitzflächen-Element
- 32: Zusatzsitz
- 33: Gelenkmittel
- 34: Schwenkgelenk
- 35: Schwenkgelenk

## Patentansprüche

1. Sitzgestell (2, 28) eines Fahrzeugsitzes (1, 27), wobei das Sitzgestell (2, 28) eine Grund-Sitzstruktur (10) mit einer Stützbein-Anordnung (11), einer Sitzflächen-Anordnung (12) und einer Rückenlehnen-Anordnung (13) für den Fahrzeugsitz (1, 27) umfasst, und wobei am Sitzgestell (2, 28) Anbringstellen zur Anbringung eines Mehrpunkt-Gurtsystems für den Fahrzeugsitz (1, 27) vorhanden sind, wobei Gelenkmittel (20, 33) zur gelenkigen Verstellung einer an der Grund-Sitzstruktur (10) vorhandenen Erweiterungs-Struktur (19, 29) eines Zusatzsitzes (21, 32) vorhanden sind, wobei mit der Erweiterungs-Struktur (19, 29) an dem Fahrzeugsitz (1, 27) wahlweise eine zusätzliche Sitzmöglichkeit mit dem Zusatzsitz (21, 32) einrichtbar und wieder rückbaubar ist, wobei die Sitzrichtung des eingerichteten Zusatzsitzes (21, 32) mit der Sitzrichtung des Fahrzeugsitzes (1, 27) übereinstimmt, wobei die Erweiterungs-Struktur (19, 29) ein an der Grund-Sitzstruktur (10) verstellbar aufgenommenes Sitzflächen-Element (23, 31) umfasst, wobei die Gelenkmittel (20, 33) derart ausgebildet sind, dass das Sitzflächen-Element (23, 31) der Erweiterungs-Struktur (19, 29) aus einer vertikal ausgerichteten Abklappstellung in eine horizontal ausgerichtete Nutzstellung schwenkbar ist und wieder in die Abklappstellung zurückschwenkbar ist, **dadurch gekennzeichnet, dass** das Sitzflächen-Element (23, 31) aus einer an der Sitzflächen-Anordnung (12) herangeklappten Stellung in eine von der Sitzflächen-Anordnung (12) weggeklappten Stellung um eine vertikale Achse verschwenkbar ist und wieder zurück.

2. Sitzgestell nach Anspruch 1, **dadurch gekennzeichnet, dass** die Gelenkmittel (20, 33) derart ausgebildet sind, dass die mit dem eingerichteten Zusatzsitz (21, 32) bereitgestellte Sitzmöglichkeit sich seitlich neben einer von dem Fahrzeugsitz (1, 27) im nicht erweiterten Zustand bereitgestellten Sitzmöglichkeit befindet.

3. Sitzgestell nach Anspruch 1 oder Anspruch 2, **dadurch gekennzeichnet, dass** die Erweiterungs-Struktur (19, 29) ein an der Grund-Sitzstruktur (10) verstellbar aufgenommenes Rückenlehnen-Element (22, 30) umfasst.

4. Sitzgestell nach einem der vorhergehenden Ansprüche, **dadurch gekennzeichnet, dass** der mit der Grund-Sitzstruktur (10) bereitstellbare Fahrzeugsitz (1, 27) als Einer-Sitzplatz oder als Mehrfach-Sitzbank ausgebildet ist.

5. Sitzgestell nach Anspruch 3, **dadurch gekennzeichnet, dass** die Gelenkmittel (20, 33) ein erstes Schwenkgelenk (24) umfassen, mit welchem das Rückenlehnen-Element (22) der Erweiterungs-Struktur (19) aus einer an der Sitzflächen-Anordnung (12) herangeklappten Stellung in eine aufrechte Stellung schwenkbar und wieder zurückschwenkbar ist.

6. Sitzgestell nach Anspruch 5, **dadurch gekennzeichnet, dass** das erste Schwenkgelenk (24) eine auf den Nutzzustand bezogen horizontal ausgerichtete Gelenkachse bereitstellt.

7. Sitzgestell nach Anspruch 5, **dadurch gekennzeichnet, dass** die Gelenkmittel (20, 33) ein zweites Schwenkgelenk (25) umfassen, mit welchem das Rückenlehnen-Element (22) der Erweiterungs-Struktur (19) um eine vertikale Achse schwenkbar ist.

8. Sitzgestell nach Anspruch 3, **dadurch gekennzeichnet, dass** die Gelenkmittel (33) ein Rückenlehnen-Schwenkgelenk (34) umfassen, mit welchem das Rückenlehnen-Element (30) der Erweiterungs-Struktur (29) aus einer an der Rückenlehnen-Anordnung (13) der Grund-Sitzstruktur (10) herangeklappten Stellung in eine von der Rückenlehnen-Anordnung (13) weggeklappten Stellung schwenkbar ist und wieder in die herangeklappte Stellung zurückschwenkbar ist.

9. Sitzgestell nach Anspruch 8, **dadurch gekennzeichnet, dass** Rückenlehnen-Schwenkgelenk (34) eine vertikal ausgerichtete Schwenkachse aufweist.

10. Sitzgestell nach Anspruch 3, **dadurch gekennzeichnet, dass** die Gelenkmittel (33) ein Sitzflächen-Schwenkgelenk (35) derart umfassen, dass das Sitzflächen-Element (31) getrennt vom Rückenlehen-Element (30) unabhängig von der Stellung des Rückenlehnen-Elements (30) schwenkbar ist.

11. Sitzgestell nach einem der vorhergehenden Ansprüche, **dadurch gekennzeichnet, dass** der eingerichtete Zusatzsitz (21, 32) über die Stützbein-Struktur der Grund-Sitzstruktur (10) abgestützt ist.

12. Fahrzeugsitz (1, 27) mit einem Sitzgestell (2, 28) nach einem der vorhergehenden Ansprüche.

## Claims

1. Seat frame (2, 28) of a vehicle seat (1, 27), wherein the seat frame (2, 28) comprises a basic seat structure (10) with a support leg arrangement (11), a seat face arrangement (12) and a backrest arrangement (13) for the vehicle seat (1, 27), and wherein on the seat frame (2, 28) fitting locations for fitting a multi-point belt system for the vehicle seat (1, 27) are provided, wherein articulation means (20, 33) are provided for articulated adjustment of an expansion structure (19, 29) of an additional seat (21, 32), said expansion structure being provided on the basic seat structure (10), wherein with the expansion structure (19, 29) on the vehicle seat (1, 27) optionally an additional seating possibility with the additional seat (21, 32) can be configured and disassembled again, wherein the seating direction of the configured additional seat (21, 32) corresponds to the seating direction of the vehicle seat (1, 27), wherein the expansion structure (19, 29) comprises a seat face element (23, 31) which is adjustably received on the basic seat structure (10), wherein the articulation means (20, 33) are constructed in such a manner that the seat face element (23, 31) of the expansion structure (19, 29) can be pivoted out of a vertically orientated folded-away position into a horizontally orientated position for use and can be pivoted back into the folded-away position again, **characterized in that** the seat face element (23, 31) can be pivoted about a vertical axis out of a position folded on the seat face arrangement (12) into a position folded away from the seat face arrangement (12) and back again.

2. Seat frame according to Claim 1, **characterized in that** the articulation means (20, 33) are constructed in such a manner that the seating possibility provided with the configured additional seat (21, 32) is located laterally beside a seating possibility which is provided by the vehicle seat (1, 27) in the non-expanded state.

3. Seat frame according to Claim 1 or Claim 2, **characterized in that** the expansion structure (19, 29) comprises a backrest element (22, 30) which is adjustably received on the basic seat structure (10).

4. Seat frame according to one of the preceding claims, **characterized in that** the vehicle seat (1, 27) which can be provided with the basic seat structure (10) is constructed as a single-person seat or as a multiple-person bench-type seat.

5. Seat frame according to Claim 3, **characterized in that** the articulation means (20, 33) comprise a first pivot joint (24), by means of which the backrest element (22) of the expansion structure (19) can be pivoted out of a position folded on the seat face arrangement (12) into an upright position and can be pivoted back again.

6. Seat frame according to Claim 5, **characterized in that** the first pivot joint (24) provides an articulation axis which is orientated horizontally with respect to the state for use.

7. Seat frame according to Claim 5, **characterized in that** the articulation means (20, 33) comprise a second pivot joint (25), by means of which the backrest element (22) of the expansion structure (19) can be pivoted about a vertical axis.

8. Seat frame according to Claim 3, **characterized in that** the articulation means (33) comprise a backrest pivot joint (34), by means of which the backrest element (30) of the expansion structure (29) can be pivoted out of a position folded on the backrest arrangement (13) of the basic seat structure (10) into a position folded away from the backrest arrangement (13) and can be pivoted back into the folded-on position again.

9. Seat frame according to Claim 8, **characterized in that** the backrest pivot joint (34) has a vertically orientated pivot axis.

10. Seat frame according to Claim 3, **characterized in that** the articulation means (33) comprise a seat face pivot joint (35) in such a manner that the seat face element (31) can be pivoted separately from the backrest element (30) regardless of the position of the backrest element (30).

11. Seat frame according to one of the preceding claims, **characterized in that** the configured additional seat (21, 32) is supported via the support leg structure of the basic seat structure (10).

12. Vehicle seat (1, 27) having a seat frame (2, 28) according to one of the preceding claims.

## Revendications

1. Carcasse de siège (2, 28) d'un siège de véhicule (1, 27), la carcasse de siège (2, 28) comportant une structure de siège de base (10) pourvue d'un arrangement de béquille (11), d'un arrangement de surfaces d'assise (12) et d'un arrangement de dossier (13) pour le siège de véhicule (1, 27), et des points de montage servant au montage d'un système de ceinture multipoint pour le siège de véhicule (1, 27) étant présents au niveau de la carcasse de siège (2, 28), des moyens d'articulation (20, 33) servant à un positionnement articulé d'une structure d'extension (19, 29) d'un siège supplémentaire (21, 32), présente au niveau de la structure de siège de base (10), étant présents, une place assise supplémentaire avec le siège supplémentaire (21, 32) pouvant, au choix, être mise en place et de nouveau démantelée avec la structure d'extension (19, 29) au niveau du siège de véhicule (1, 27), la direction d'assise du siège supplémentaire (21, 32) mis en place coïncidant avec la direction d'assise du siège de véhicule (1, 27), la structure d'extension (19, 29) comportant un élément de surface d'assise (23, 31) accueilli de manière positionnable au niveau de la structure de siège de base (10), les moyens d'articulation (20, 33) étant configurés de telle sorte que l'élément de surface d'assise (23, 31) de la structure d'extension (19, 29) peut être pivoté d'une position rabattue orientée verticalement en une position d'utilisation orientée horizontalement et peut de nouveau être pivoté en sens inverse dans la position rabattue, **caractérisée en ce que** l'élément de surface d'assise (23, 31) peut être pivoté autour d'un axe vertical d'une position rabattue contre l'arrangement de surfaces d'assise (12) en une position rabattue à l'écart de l'arrangement de surfaces d'assise (12) et de nouveau en sens inverse.

2. Carcasse de siège selon la revendication 1, **caractérisée en ce que** les moyens d'articulation (20, 33) sont configurés de telle sorte que la place assise fournie avec le siège supplémentaire (21, 32) mis en place se trouve latéralement à côté d'une place assise fournie par le siège de véhicule (1, 27) dans l'état non étendu.

3. Carcasse de siège selon la revendication 1 ou la revendication 2, **caractérisée en ce que** la structure d'extension (19, 29) comporte un élément de dossier (22, 30) accueilli de manière positionnable au niveau de la structure de siège de base (10).

4. Carcasse de siège selon l'une des revendications précédentes, **caractérisée en ce que** le siège de véhicule (1, 27) qui peut être fourni par la structure de siège de base (10) est réalisé sous la forme d'une place assise individuelle ou d'une banquette collective.

5. Carcasse de siège selon la revendication 3, **caractérisée en ce que** les moyens d'articulation (20, 33) comportent une première articulation de pivotement (24), avec laquelle l'élément de dossier (22) de la structure d'extension (19) peut être pivoté depuis une position rabattue contre l'arrangement de surfaces d'assise (12) en une position droite et de nouveau être pivoté en sens inverse.

6. Carcasse de siège selon la revendication 5, **caractérisée en ce que** la première articulation de pivotement (24) fournit un axe d'articulation orienté horizontalement en référence à l'état d'utilisation.

7. Carcasse de siège selon la revendication 5, **caractérisée en ce que** les moyens d'articulation (20, 33) comportent une deuxième articulation de pivotement (25), avec laquelle l'élément de dossier (22) de la structure d'extension (19) peut être pivoté autour d'un axe vertical.

8. Carcasse de siège selon la revendication 3, **caractérisée en ce que** les moyens d'articulation (33) comportent une articulation de pivotement de dossier (34), avec laquelle l'élément de dossier (30) de la structure d'extension (29) peut être pivoté depuis une position rabattue contre l'arrangement de dossier (13) de la structure de siège de base (10) en une position rabattue à l'écart de l'arrangement de dossier (13) et de nouveau être pivoté en sens inverse dans la position rabattue contre.

9. Carcasse de siège selon la revendication 8, **caractérisée en ce que** l'articulation de pivotement de dossier (34) possède un axe de pivotement orienté verticalement.

10. Carcasse de siège selon la revendication 3, **caractérisée en ce que** les moyens d'articulation (33) comportent une articulation de pivotement de surfaces d'assise (35) de sorte que l'élément de surface d'assise (31) peut être pivoté séparément de l'élément de dossier (30) et indépendamment de la position de l'élément de dossier (30).

11. Carcasse de siège selon l'une des revendications précédentes, **caractérisée en ce que** le siège supplémentaire (21, 32) mis en place est soutenu par le biais de la structure de béquille de la structure de siège de base (10).

12. Siège de véhicule (1, 27) comprenant une carcasse de siège (2, 28) selon l'une des revendications précédentes.
